Europäisches Patentamt

**European Patent Office**

**Office européen des brevets**

(11) Numéro de publication: **0 023 859**
**A1**

(12) **DEMANDE DE BREVET EUROPEEN**

(21) Numéro de dépôt: **80401110.4**

(51) Int. Cl.³: **B 23 Q 1/16**

(22) Date de dépôt: **25.07.80**

(30) Priorité: **03.08.79 FR 7919949**

(43) Date de publication de la demande: **11.02.81**
**Bulletin 81/6**

(84) Etats contractants désignés: **AT BE CH DE GB IT LI NL SE**

(71) Demandeur: **Framatome, Tour Fiat 1 place de la Coupole, F-92400 Courbevoie (FR)**

(72) Inventeur: **Marmorat, André, 30 rue des Martyrs, F-71200 Le Creusot (FR)**
Inventeur: **Marion, Jean, 2 rue de Bourgogne, F-71600 Paray-le-Monial (FR)**

(74) Mandataire: **Bouget, Lucien et al, CREUSOT-LOIRE 15 rue Pasquier, F-75383 Paris Cedex 08 (FR)**

(54) **Dispositif de basculement d'une pièce de poids élevé.**

(57) Le dispositif comporte un support mobile (3) en rotation autour d'un axe horizontal (2) sur lequel repose la pièce (20) de poids élevé et au moins un vérin (5) relié de façon articulée au support mobile (3). Le support (5) est mobile entre deux positions stables dans lesquelles il repose sur des dispositifs d'appui (22, 23) disposés de part et d'autre du plan vertical (26) contenant l'axe de rotation (2) du support. L'effort exercé par le vérin (5) au cours de la rotation de 90° est d'abord moteur, puis résistant. Le vérin (5) est alimenté par un circuit hydraulique comportant une vanne de séquence pilotée par la pression d'alimentation du vérin et une vanne de freinage.

L'invention s'applique en particulier à la manutention de sous-ensembles de réacteurs nucléaires.

"Dispositif de basculement d'une pièce de poids élevé"

L'invention concerne un dispositif de basculement d'une pièce de poids élevé, d'un angle voisin de 90° dans un sens et dans l'autre.

Dans le domaine de la grosse chaudronnerie, c'est-à-dire dans le domaine de la fabrication des éléments chaudronnés de poids très important, il est nécessaire d'effectuer des basculements de pièces, par exemple de pièces forgées, dont le poids est supérieur à 100 tonnes.

En particulier, dans le cas de la fabrication des éléments de cuve pour réacteurs nucléaires à eau pressurisée, il est nécessaire d'effectuer le basculement de sous-ensembles eux-mêmes constitués par des viroles ou des brides soudées entre elles pour opérer sur ces sous-ensembles les opérations d'usinage, de soudage ou de traitement thermique intervenant dans le cycle de fabrication.

C'est ainsi qu'au cours de la fabrication du sous-ensemble supérieur d'une cuve de réacteur nucléaire à eau pressurisée dont le poids est d'environ 150 tonnes pour les réacteurs construits actuellement, il est nécessaire de basculer le sous-ensemble dix huit fois pour le faire passer de la position verticale à la position horizontale, et vice versa.

Ces rotations de 90° du sous-ensemble supérieur sont nécessaires car les différentes opérations successives effectuées sur le sous-ensemble (tournage, fraisage, soudage, détensionnement ou contrôle) sont effectuées soit avec le sous-ensemble en position verticale, soit avec le sous-ensemble en position horizontale.

Jusqu'ici les opérations de basculement des différents éléments constituant une cuve de réacteur nucléaire étaient effectuées à l'aide d'outillages spéciaux adaptés à chacune des pièces composant la cuve.

Ces outillages comportent des stands sur lesquels des supports montés tourillonnants permettent de faire tourner les éléments de cuve à symétrie de révolution autour de leur axe généralement disposé à l'horizontale, des colliers de manutention, des palonniers munis de bielles de basculement liées au pont de manutention et d'autres outillages ayant une fonction particulière, l'utilisation successive de ces outillages permettant de réaliser des basculements des éléments de la cuve en cours de fabrication.

Les opérations de basculement d'un élément de poids élevé de la cuve étaient donc extrêmement longues, car, préalablement à l'utilisation des outillages mentionnés ci-dessus, il fallait effectuer un montage des colliers de manutention sur l'élément ou une fixation du palonnier et d'autre part la vitesse du pont de manutention utilisé dans sa fonction de retournement, était extrêmement faible, de l'ordre de 1 mètre par minute.

Il fallait donc compter pour chaque opération de basculement d'un élément tel qu'un sous-ensemble, entre la position horizontale et la position verticale ou vice-versa, un temps voisin de 40 heures.

Ceci ralentit donc fortement la fabrication et occasionne un temps d'utilisation des moyens de manutention extrêmement long.

On connait d'autre part, dans le domaine de la chaudronnerie ou dans le domaine de la construction à l'aide de pièces de béton de poids très important, des basculeurs constitués par un support mobile ou plateforme articulée sur un support fixe dont le mouvement de rotation est assuré grâce à un vérin articulé d'une part sur le support fixe et d'autre part sur le support mobile.

Dans certains cas, le support mobile est constitué par une structure dont la section par un plan perpendiculaire à l'axe de rotation a la forme d'une équerre et ce support vient reposer, de façon stable, sur des appuis disposés de part et d'autre du plan vertical contenant l'axe de rotation, la pièce étant en position horizontale pour l'une des positions stables du support et en position verticale pour l'autre.

Le vérin dont la tige est articulée au voisinage de la partie centrale de l'équerre a un rôle moteur pendant une partie du déplacement en rotation du support et un rôle résistant pendant l'autre partie du déplacement. Cependant, lorsqu'on passe du fonctionnement du vérin en moteur au fonctionnement en frein, la stabilité hydraulique du dispositif n'est pas bonne. D'autre part, au moment où la charge approche de ses appuis, il est très difficile de régler parfaitement la vitesse de descente en agissant sur le vérin, pourréaliser un accostage à très petite vitesse.

Le but de l'invention est donc de proposer un dispositif de basculement d'une pièce de poids élevé, d'un angle voisin de 90° dans un sens ou dans l'autre, comportant un châssis (1) fixé au sol, un support de charge sur lequel repose la pièce mobile en rotation autour d'un axe horizontal par rapport au châssis dont le profil dans un plan perpendiculaire à l'axe de rotationest en forme d'équerre et au moins un vérin à double effet fixé de façon articulée au châssis fixe dont la tige est reliée articulée au support mobile au voisinage de la partie centrale de l'équerre pour son entrainement dans un sens par déplacement de la tige et dans l'autre par repli de cette tige, dans un mouvement de rotation entre deux positions stables dans lesquelles il repose sur des dispositifs d'appui disposés de part et d'autre du plan vertical contenant l'axe de rotation, dispositif permettant de maintenir la charge efficacement au début de son mouvement de descente et de freiner ce mouvement de descente de façon parfaitement contrôlée en fin de ce mouvement./ Dans ce but le vérin est alimenté par un circuit hydraulique comportant une valve dite valve de séquence, à l'entrée de chacune des chambres du vérin pilotée par son ouverture par la pression d'alimentation de ce vérin et au moins une valve de freinage à fermeture progressive lorsque la charge mobile approche de son appui de réception, l'action du vérin, au cours du basculement étant successivement, motrice jusqu'au moment où le centre de gravité de l'ensemble support-charge traverse le plan vertical contenant l'axe de rotation, puis résistante jusqu'au moment où la rotation s'achève par la dépose de l'ensemble support-charge sur son appui de réception, l'effort moteur étant alors exercé par le poids de l'ensemble support-charge.

Afin de bien faire comprendre l'invention on va maintenant décrire à titre d'exemple non limitatif un mode de réalisation du dispositif de basculement selon l'invention et un exemple d'utilisation de ce dispositif pour le basculement du sous-ensemble supérieur d'une cuve de réacteur nucléaire à eau sous pression.

La figure 1 représente dans une vue en élévation le dispositif de basculement sur lequel le sous-ensemble est dans sa position verticale.

La figure 2 représente le dispositif de basculement après rotation de 90°, le sous -ensemble étant alors dans sa position horizontale.

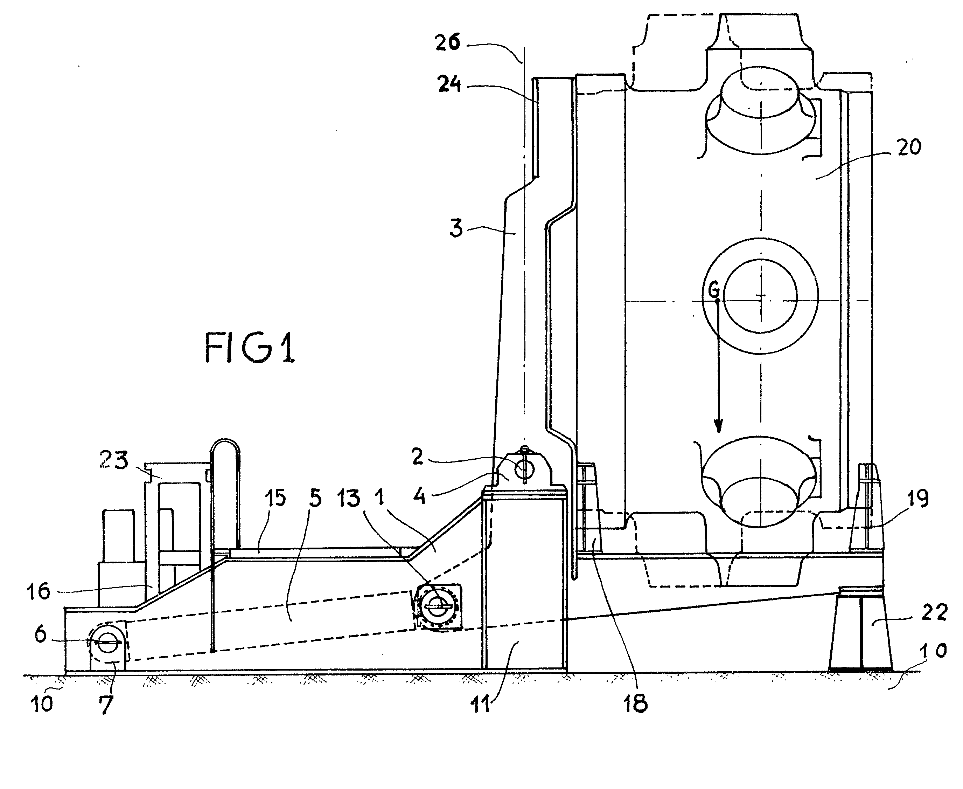

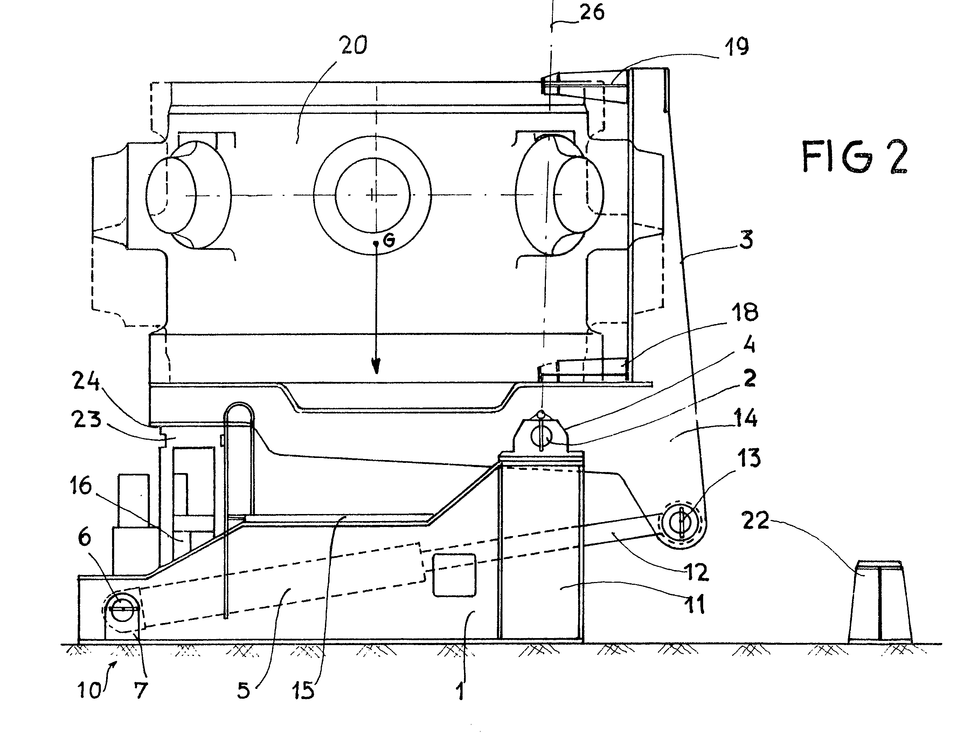

Sur les figures 1 et 2, on voit le support fixe 1 du dispositif de basculement constitué par une structure métallique pouvant supporter sans déformation notable des charges très importantes.

Ce châssis fixe 1 porte par l'intermédiaire d'un axe 2 tourillonnant dans des paliers tels que 4 un support mobile 3 constitué par deux équerres réunies par des pièces d'entretoisement.

Le châssis fixe 1 et le support de charge 3 sont réalisés sous forme mécanosoudée, par assemblage de poutres-caissons dont le profil est représenté aux figures 1 et 2, assemblées par desentretoises disposées transversalement, c'est à dire perpendiculairement au plan des figures 1 et 2.

Chacune des parties latérales du châssis fixe 1 est en réalité constituée par un double caisson.

Entre les deux parties de ce double caisson est disposé un vérin 5 dont le corps est fixé à l'unede se s extrémités de façon articulée au châssis fixe 1 par l'intermédiaire d'un axe 6 tourillonnant dans des paliers 7 fixés sur le châssis fixe.

Un vérin tel que 5 est disposé de chaque côté du dispositif de basculement, de façon articulée par rapport au châssis.

Chacun des caissons est fixé au sol 10 de l'atelier pour la stabilisation du châssis.

La tige 12 du vérin 5 est fixée articulée par l'intermédiaire d'un axe 13 à la partie coudée 14 du caisson en forme de L du support mobile disposée latéralement du côté du vérin 5.

Chacun des deux vérins 5 est ainsi relié d'une part au châssis fixe et d'autre part à la partie coudée de l'équerre du support mobile disposé latéralement du même côté du châssis.

Les axes 2, 6 et 13 sont immobilisés en translation par des clavettes.

La partie coudée de chacune des deux équerres du support mobile 3 comporte une excroissance sur laquelle est fixé l'axe 13 d'articulation de la tige du vérin. De cette façon, quelle que soit sa position, le vérin 5 ne gêne pas le mouvement du support mobile 3.

Le support 1 comporte à sa partie supérieure une plateforme 15 permettant un accès au dispositif, par exemple pour la fixation des câbles pour la reprise de charge en vue d'une opération de manutention.

Sur le support 1 est également fixé l'ensemble de commande hydraulique des vérins 16. Cet ensemble comporte un moteur hydraulique et son armoire de commande.

Sur le support mobile 3 sont disposées des pièces de fixation de la charge 18 et 19 réglables sur la partie droite de l'équerre en fonction du type de pièce dont on effectue le basculement.

Dans l'exemple de réalisation représenté aux figures 1 et 2 la charge est constituée par le sous-ensemble supérieur 20 de la cuve d'un réacteur nucléaire à eau pressurisée.

Les vérins 5 sont des vérins à double effet pouvant exercer une poussée de 160 tonnes. Chacune des chambres de ces vérins est reliée à un circuit hydraulique permettant la commande des manoeuvres de basculement dans un sens et dans l'autre.

Au cours de ces basculements, la charge et le support mobile sur lequel elle est fixée se déplacent entre deux positions stables représentées aux figures 1 et 2 dans lesquelles le support mobile repose sur des dispositifs d'appui 22 et 23 respectivement.

Le dispositif d'appui 22 est fixé sur le sol 10 de l'atelier indépendamment du châssis fixe 1.

L'appui 23 constitue par contre une partie du châssis fixe 1 sur laquelle viennent reposer les semelles 24 constituant chacune l'une des extrémités des équerres 3 du châssis mobile.

Chacun des deux appuis 22 et 23 est recouvert de semelles de Néoprène faisant office d'amortisseurs.

Chacune des chambres des vérins 5 est reliée à un réservoir de fluide hydraulique par l'intermédiaire de valves de séquence et de valves de freinage pour son alimentation en fluide hydraulique par une pompe ou pour le retour du fluide hydraulique au réservoir.

Grâce aux valves de séquence chacune des chambres de chaque vérin peut être alimentée en fluide hydraulique moteur suivant le mouvement à réaliser à l'aide de ce vérin.

L'autre chambre, également reliée au circuit hydraulique par l'intermédiaire d'une valve de séquence et d'une valve de freinage, se vide de son fluide hydraulique pendant le mouvement du piston sous l'effet du fluide moteur.

Pour chacun des deux vérins le branchement sur le circuit hydraulique est identique.

Chacune des valves de séquence disposée à l'entrée ou à la sortie des chambres des vérins est pilotée pour son ouverture par le fluide d'alimentation du vérin.

Ainsi lorsqu'on alimente les chambres correspondantes des deux vérins pour un mouvement de basculement dans un sens, la pression d'alimentation provoque l'ouverture de la valve de séquence disposée sur la sortie de la chambre du vérin qui n'est pas alimentée et lorsque la pression est suffisante pour provoquer le mouvement du vérin, le fluide de la chambre qui n'est pas alimentée à l'intérieur de laquelle avance le piston du vérin fait retour au réservoir par l'intermédiaire de la valve de séquence dont l'ouverture est assurée par la pression d'alimentation et de la valve de freinage qui reste ouverte pendant le mouvement du piston.

Si nous supposons que le support mobile portant la charge constituée par le sous-ensemble supérieur d'une cuve de réacteur nucléaire est au départ dans sa position verticale représentée à la figure 1, la pression doit d'abord monter dans la c hambre du vérin alimentée pour provoquer le déploiement de la tige 12 de ce vérin jusqu'au moment où l'effort est suffisant pour provoquer le mouvement de rotation du support mobile/de et la charge.

Le mouvement se poursuit alors par avancée de la tige 12, le fluide hydraulique s'écoulant comme il a été décrit précédemment grâce à l'ouverture de la valve de séquence sous l'effet de la pression d'alimentation.

Au cours du mouvement de rotation du support mobile et de sa charge, l'effort décroit progressivement puisque le couple à exercer sur ce support mobile en rotation autour de l'axe 2 diminue de la même façon que le couple résistant exercé par le poids de l'ensemble support-charge qu'on peut considérer comme appliqué au centre de gravité G de l'ensemble. En effet, au cours de la rotation du support mobile et de sa charge, le moment du vecteur P représentant le poids de la charge par rapport à l'axe 2 diminue progressivement pour s'annuler au moment où le centre de gravité G de l'ensemble traverse le plan vertical passant par l'axe 2 dont la trace sur le plan des figures 1 et 2 est représentée par la droite désignée par le repère 26.

L'effort moteur décroissant progressivement, la pression dans la chambre alimentée du vérin décroit elle-même jusqu'à devenir nulle au moment où le centre de gravité traverse le plan de trace 26.

La pression d'alimentation devenant insuffisante pour continuer à piloter la valve de séquence dans le sens de son ouverture, cette valve de séquence située à la sortie de la chambre non alimentée se ferme, ce qui a pour effet de maintenir la charge et de l'empêcher de retomber au moment où cette charge arrive à l'équilibre.

Cet effort résistant permet de faire monter à nouveau la pression dans le circuit d'alimentation et il s'établit un équilibre entre le débit d'alimentation du vérin et le débit de sortie de l'huile de la chambre non alimentée, la valve de séquence s'ouvrant à nouveau lorsque la pression dans le circuit d'alimentation augmente.

La charge descend alors à une vitesse correspondant au débit d'alimentation de la chambre du vérin.

Vers la fin du mouvement, c'est à dire lorsque la charge arrive pratiquement dans sa position horizontale représentée à la figure 2, une came actionne le galet de la valve de freinage disposé sur le circuit d'échappement de l'huile et ferme progressivement le tiroir de cette valve de freinage, ce qui diminue la vitesse de descente de la charge et du support mobile.

Les valves sont réglées de façon qu'un débit résiduel faible soit laissé sur la valve de freinage pour terminer l'accostage.

Un contact de fin de course actionné par le support mobile lorsque celui-ci est à quelques millimètres du contact avec la butée 23 ferme les vannes du circuit hydraulique ce qui permet d'éviter d'ajouter l'effort des vérins au poids de la charge lorsque celle-ci est reçue sur la butée 23.

Le dispositif hydraulique qui vient d'être décrit permet également d'arrêter la charge à tout moment au cours de sa rotation de 90° autour de l'axe 2 pour passer de la position verticale à la position horizontale, ou inversement.

Cet arrêt ne se fait pas de façon brutale, les valves de séquence ayant pour but de limiter l'effort de décélération à un niveau admissible.

Les principaux avantages de l'invention, ainsi qu'il apparait dans la description de l'exemple de réalisation, sont que, la pièce une fois déposée sur le dispositif de basculement, la rotation s'effectue en un temps très court, par un déplacement de l'ensemble mobile entre deux positions stables, que l'effort moteur n'est exercé par les vérins que pendant une partie du basculement, que le dispositif permet un amortissement de la dépose de l'ensemble mobile en fin de basculement et que le dispositif est entièrement autonome, si bien qu'aucun autre moyen de manutention n'est nécessaire pendant le basculement.

Dans le cas d'un sous-ensemble supérieur d'une cuve de réacteur nucléaire à eau sous pression d'un poids de 150 tonnes, le temps de basculement est d'environ 5 minutes et l'on évite ainsi les opérations de préparation et de basculement par les moyens de manutention classiques extrêmement longues. A titre de comparaison, cette préparation et ce basculement par des moyens classiques de manutention demandent un temps de l'ordre de 40 heures pour un sous-ensemble supérieur de cuve de réacteur nucléaire.

Le dispositif suivant l'invention a permis un gain de 300 heures sur le temps de fabrication du sous-ensemble supérieure de la cuve d'un réacteur nucléaire à eau pressurisée.

D'autre part, les conditions de travail et de sécurité sont beaucoup améliorées par le dispositif suivant l'invention.

L'effort moteur exercé par le vérin est maximum au démarrage du basculement, lorsque l'ensemble mobile et sa charge sont en repos sur un appui fixe.

Au contraire, cet effort moteur (ou ensuite l'effort résistant) est faible au moment où la pièce est dans sa position la plus éloignée des appuis fixes.

D'autre part, il est apparent que la commande hydraulique des vérins permet d'automatiser parfaitement les opérations de basculement.

Mais il est bien évident que l'invention ne se limite pas au mode de réalisation de l'invention qui vient d'être décrit mais qu'elle en comporte au contraire toutes les variantes.

C'est ainsi qu'on peut imaginer une commande de vérin d'un type différent de celle qui a été décrite, cette commande devant permettre néanmoins une modulation de la pression envoyée dans la chambre d'alimentation du vérin à double effet et un freinage du mouvement de l'ensemble mobile lors de sa descente dans la deuxième partie du basculement.

Il est bien évident également que l'invention ne se limite pas au basculement des composants de réacteurs nucléaires en cours de fabrication mais qu'elle est susceptible de s'appliquer dans toute industrie où le basculement à 90° de pièces de poids très élevé est nécessaire.

REVENDICATIONS

1.- Dispositif de basculement d'une pièce de poids élevé, d'un angle voisin de 90° dans un sens ou dans l'autre, comportant un châssis (1) fixé au sol, un support de charge (3) sur lequel repose la pièce (20) mobile en rotation autour d'un axe horizontal (2) par rapport au châssis (1) dont le profil dans un plan perpendiculaire à l'axe de rotation (2) est en forme d'équerre et au moins un vérin (5) à double effet fixé de façon articulée au châssis fixe (1) dont la tige (12) est reliée articulée au support mobile (3) au voisinage de la partie centrale de l'équerre pour son entrainement dans un sens par déplacement de la tige et dans l'autre par repli de cette tige, dans un mouvement de rotation entre deux positions stables dans lesquelles il repose sur des dispositifs d'appui (22, 23) disposés de part et d'autre du plan vertical (26) contenant l'axe de rotation (2), caractérisé par le fait que le vérin (5) est alimenté par un circuit hydraulique comportant une valve dite valve de séquence, à l'entrée de chacune des chambres du vérin pilotée par son ouverture par la pression d'alimentation de ce vérin et au moins une valve de freinage à fermeture progressive lorsque la charge mobile approche de son appui de réception (22 ou 23),l'action du vérin (5), au cours du basculement étant successivement, motrice jusqu'au moment où le centre de gravité de l'ensemble support-charge (3, 20) traverse le plan vertical (26) contenant l'axe de rotation, puis résistante jusqu'au moment où la rotation s'achève par la dépose de l'ensemble support-charge (3, 20) sur son appui de réception (22 ou 23), l'effort moteur étant alors exercé par le poids de l'ensemble support-charge (3, 20).

2.- Dispositif de basculement suivant la revendication 1, caractérisé par le fait que des dispositifs de fixation de la charge réglables (18,19) sont disposés sur le support mobile.

FIG1

0023859

FIG 2

0023859

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| | THE TOOL ENGINEER, septembre 1952 Society of manufacturing engineers MILWAUKEE US page 60 * Page 60, figure 14 * | 1 | B 23 Q 1/16 |
| A | FR - A - 2 076 244 (V.E.B.) | | |
| A | FR - A - 2 287 306 (KHMELNITSKY) | | |
| A | FR - A - 2 134 141 (EQUIPELEC) | | DOMAINES TECHNIQUES RECHERCHES (Int. Cl. ³) |
| A | GB - A - 1 293 796 (WALTON) | | |
| A | FR - A - 2 293 614 (HAVRE) | | |
| A | DE - A - 2 201 296 (VEREINIGTE OSTERREICHISCHE EISEN- UND STAHLWERKE AG) | | B 23 Q<br>B 25 H<br>B 23 K<br>F 15 B |
| A | FR - A - 1 157 293 (BRITISH OXYGEN COMP. LTD) | | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 05-11-1980 | DE GUSSEM |

OEB Form 1503.1  06.78